(19) **Europäisches Patentamt**
**European Patent Office**
**Office européen des brevets**

(11) **EP 0 987 874 B1**

(12) **EUROPÄISCHE PATENTSCHRIFT**

(45) Veröffentlichungstag und Bekanntmachung des Hinweises auf die Patenterteilung:
**13.08.2003 Patentblatt 2003/33**

(51) Int Cl.$^7$: **H04N 1/195**, H04N 1/10

(21) Anmeldenummer: **98117431.1**

(22) Anmeldetag: **15.09.1998**

(54) **Gerät für das Umwandeln von Bildern oder Abbildern in elektronische Signale**

Device for converting images into electronical signals

Appareil pour convertir des images en signaux électroniques

(84) Benannte Vertragsstaaten:
**AT DE ES FR GB IT**

(43) Veröffentlichungstag der Anmeldung:
**22.03.2000 Patentblatt 2000/12**

(73) Patentinhaber: **Wolf, Josef**
**6800 Feldkirch (AT)**

(72) Erfinder: **Wolf, Josef**
**6800 Feldkirch (AT)**

(74) Vertreter: **Kaminski, Susanne et al**
**Büchel, Kaminski & Partner**
**Patentanwälte Est.**
**Austrasse 79**
**9490 Vaduz (LI)**

(56) Entgegenhaltungen:
**EP-A- 0 488 127**      **EP-B- 0 362 737**
**US-A- 5 253 286**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Gerät für das Umwandeln von Bildern oder Abbildern in elektronische Signale nach dem Oberbegriff des Anspruches 1.

Unter dem Begriff "Bilder oder Abbilder" sind sowohl Bilder im herkömmlichen Sinn, wie Fotografien, Diapositive, Zeichnungen usw., aber auch sonstige Informationsaufzeichnungen, wie Textseiten, Schriftstücke usw., aber auch Objekte jeglicher Art, so auch bewegte Objekte, zu verstehen.

Ein solches Gerät ist in der EP-B1-362 737 beschrieben, bei dem ein Lichtprojektor im Geräteinneren über ein Spiegelsystem ein Lichtfeld in derselben Grösse wie der Aufnahmebereich einer Videokamera auf die Arbeitsfläche projiziert. Das Bild wird von der Kamera in gleicher Weise aufgenommen. Die Optiken des Lichtprojektors und der Kamera sind synchronisiert, wodurch sich die Grösse des Lichtfeldes auf der Arbeitsfläche mit Änderung des Zoombereiches der Kamera ändert. Das Abtast- und Beleuchtungssystem gewährleistet eine im wesentlichen schattenfreie Beleuchtung und eine äusserst hohe Tiefenschärfe. Dazu kommt, dass aufgrund der präzisen Projizierung des Lichtes auf die Bildgrösse auf der Arbeitsfläche kein störendes Streulicht entsteht, ein nicht unbeträchtlicher Komfort für die Wiedergabe mit Projektoren.

Durch die Verwendung von Zoom-Objektiven mit mehreren Linsenelementen werden mehrfache Brennweiten ermöglicht. Bei höheren Zoom-Faktoren werden jedoch die Lichtstärke des Objektivs und die Präzision der Bildwiedergabe aufgrund von verminderter Auflösung, grösserer Verzerrung und gegebenenfalls nicht ganz korrekter Farbwiedergabe herabgesetzt.

Würde auch die beste Bildqualität mit an im allgemeinen senkrecht angeordneten Achsen verschiebbar gelagerten Fix-Objektiven, sogenannten Repro-Einrichtungen, erreicht werden können, wobei parallel dazu die Beleuchtungseinrichtung zu justieren und die Abtastdistanz zwischen einer Vorlagefläche und einer Bildebene einzustellen ist, so ist eine solche Vorrichtung für die Präsentationstechnik, wie auch für Videokonferenzen oder im Einsatz als 3D-Scanner im allgemeinen zu gross und unhandlich.

Aus der EP 0 488 127 A2 ist eine ebenfalls stationäre Repro-Einrichtung bekannt, bei welcher der Strahlengang zwischen einer Vorlagefläche und einer Bildebene über einen Spiegel einfach gefaltet ausgebildet ist. Bei dieser Repro-Einrichtung ist neben der Position des Objektivs und der Vorlagefläche zudem noch die Position des Spiegels relativ zur Bildebene in Abhängigkeit der Abtastdistanz einzustellen.

Aufgrund von Anforderungen, die an Transportierbarkeit und Handlichkeit solcher Präsentationsgeräte gestellt werden, stellt sich das Erfordernis, die Abmessungen der Präsentationsgeräte zu limitieren, wodurch auch die Objektivgrösse der im Gerät angeordneten Kamera und somit deren Zoom-Bereich begrenzt wird. Dazu kommen kommerzielle Überlegungen, die die Kostenschere beim Einsatz von Kameras mit höheren Zoom-Bereichen berücksichtigen.

Die Erfindung hat sich demgegenüber die Aufgabe gestellt, ein Gerät der oben genannten Art mit einer über die Wirkung der Optik hinausgehenden Zoom-Wirkung bei gleichbleibender Tiefenschärfe und Auflösung bereitzustellen.

Dies gelingt durch die Verwirklichung der kennzeichnenden Merkmale des Anspruchs 1. Vorteilhafte bzw. alternative Ausführungsformen werden durch die Merkmale der abhängigen Ansprüche beschrieben.

Dadurch, dass zusätzlich zu der aus dem Stand der Technik bekannten Beweg- bzw. Schwenkbarkeit des als Abtastkopf dienenden Spiegels um seine Achse auch eine Verschiebbarkeit des Spiegels entlang eines Trägers gegeben ist, wird der Strahlengang Bild-Kameraobjektiv jeweils um das Doppelte des Verschiebewegs des Spiegels verlängert bzw. verkürzt. Die Verlängerung bzw. Verkürzung des Strahlengangs bewirkt für die aufzunehmende Kamera eine Vergrösserung bzw. Verkleinerung des aufzunehmenden Bildes. Bei Verwendung einer Fix-Optik bewirkt dies den Effekt einer Zoom-Optik, für Zoom-Optiken wird die Zoom-Wirkung erhöht, ohne dass weitere, der Bildqualität abträgliche Linsen verwendet werden müssen.

Eine möglichst einfache Bedienbarkeit des Geräts wird dann gegeben sein, wenn mit Verschieben des Spiegels und dessen Verwendung als "Zoom" sowohl der Spiegel um die eigene Achse verschwenkt wird, sodass gewährleistet ist, dass immer dieselbe Stelle am aufzunehmenden Objekt abgetastet wird, als auch der Fokus des Kamera-Objektivs dem neuen Abtastungsabstand entsprechend nachjustiert wird. Diese zu kombinierenden Funktionen können mechanisch, elektrisch oder elektronisch realisiert werden.

Die Erfindung wird im folgenden anhand der Zeichnung rein beispielhaft beschrieben. Es zeigen:

Fig.1    ein Gerät im Schrägriss;

Fig.2    das Gerät entsprechend Fig.1 in Seitenansicht, wozu;

Fig.2a   den Strahlengang bei verstelltem zweiten Spiegel zeigt;

Fig.3    ein Blockdiagramm, aus dem die Arbeitsweise einer erfindungsgemässen Zoomeinrichtung zu ersehen ist und

Fig.4    ein den softwaremässig gesteuerten Ablauf darstellendes Flussdiagramm.

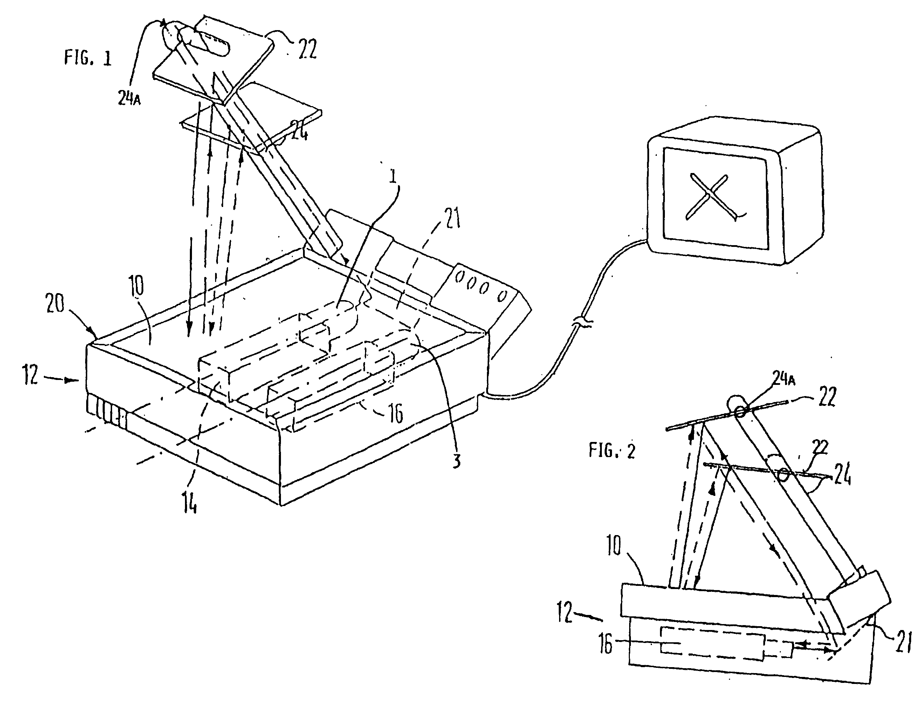

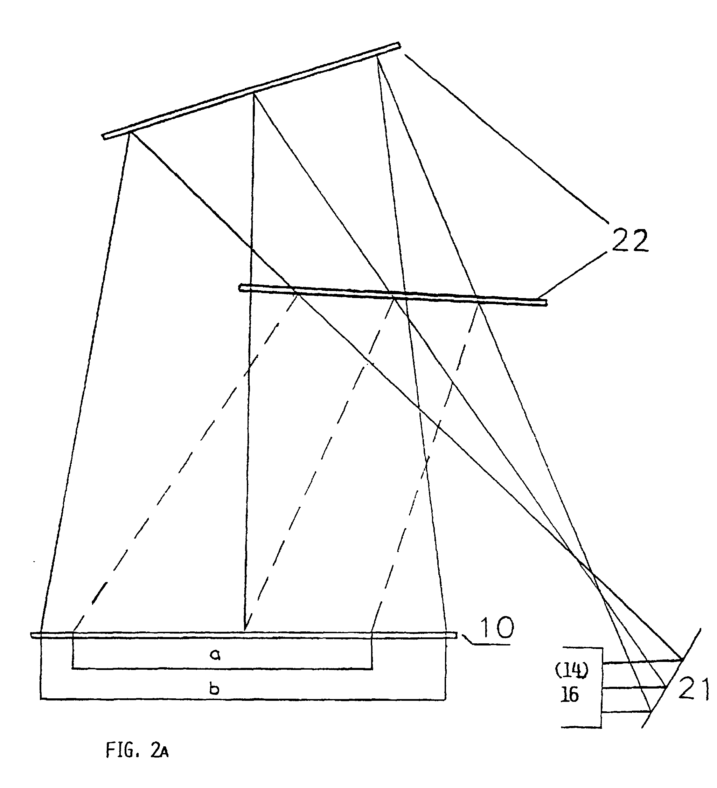

Aus den Fig.1 und 2 ist ein Gerät zum Aufzeichnen von Bildern von einer Projektionsfläche 10 mit einer in einem Gehäuse 12 untergebrachten Lichtquelle 16 zu entnehmen. In dem Gehäuse ist eine Kamera 14 untergebracht, die die auf der Projektionsfläche 10 dargestellten oder befindlichen Bilder aufnimmt. Aber auch ausserhalb dieser Projektionsfläche, beispielsweise im Raum, befindliche Bilder bzw. Gegenstände können durch entsprechendes Verdrehen eines an einem mit dem Gehäuse 12 verbundenen Trägerarms 24 aufgenommen werden.

Von der Lichtquelle 16 - ein Projektor mit Objektiv - abgegebenes Licht wird über einen ersten Spiegel 21 und einen zweiten Spiegel 22 auf die Projektionsfläche 10 gerichtet. Ein dort befindliches bzw. dorthin projiziertes, solcherart beleuchtetes Bild wird wiederum über die beiden Spiegel 22 und 21 in das Objektiv der Kamera 14 gespiegelt. Der zweite Spiegel 22 ist an dem Trägerarm 24 um ein Kugelgelenk verschwenkbar, sodass jeder Bereich bzw. gewünschte Teilbereich der Projektionsfläche 10 abgebildet werden kann. Die Kamera 14 und der Projektor - die Lichtquelle 16 - sind in dem Gehäuse so angeordnet, dass deren optischen Achsen in einem Winkel von wenigen Grad zueinander verlaufen. Die Kamera 14 ist über eine elektrische Leitung mit einem oder mehreren Wiedergabegeräten, wie beispielsweise einem Monitor, verbunden.

Projektionsfläche ist demnach ganz allgemein jede Fläche, auf die die Lichtstrahlen mit oder ohne eigenem Bildinhalt projiziert werden; sie kann durch Verschwenken des zweiten Spiegels willkürlich gewählt werden und von ihr wird das Bild bzw. Abbild durch die Kamera aufgenommen. Sie kann sich am oder neben dem Gehäuse befinden, z.B. auf einer Tischoder Wandoberfläche, oder aber von der Oberfläche eines beliebigen Objektes gebildet sein.

Das Auffinden eines bestimmten Bereichs einer Projektionsfläche mit der Kamera erfolgt - wie in der EP-B1-0 362 737 geoffenbart - gewissermassen automatisch durch Verschwenken des zweiten Spiegels um ein am Trägerarm vorgesehenes Kugelgelenk, wobei der Spiegel für eine Bedienperson deutlich sichtbar gleichzeitig den Lichtstrahl auf eben diesen Bereich lenkt und diesen ausleuchtet. Die Person orientiert den Aufnahmeort der Kamera also durch das Orientieren des Lichtstrahles auf eine bestimmte Stelle an der Projektionsfläche. Dabei bewirkt die Spiegelkombination aus erstem und zweitem Spiegel gleichzeitig eine Verlängerung des Lichtweges von dem Bild zu den Objektiven, wodurch eine gute Tiefenschärfe erzielt werden kann, was sonst nur durch überlange Objektive möglich ist. Ab ca. 90 cm Lichtweg entspricht die Tiefenschärfe den häufigsten Anforderungen.

In gleicher Weise kann aber auch über das Verschwenken des ersten Spiegels 21 jeder Bereich auf der Projektionsfläche abgetastet, aufgefunden und weggeschwenkt werden. Auch die Kombination der Schwenkbewegung beider Spiegel ist möglich.

Die Verwendung von synchronisierten Zoom-Objektiven entsprechend der EP-B1-0 362 737 stellt die Abbildungskongruenz auch bei verschiedensten Bildausschnitten sicher und erhöht insbesondere bei Fernsteuerung die Bedienerfreundlichkeit des Gerätes.

Sind die beiden Objektive von Kamera und Projektor synchron miteinander verstellbar, so sind verschiedene zusätzliche Effekte möglich, wie z.B. das Heraussuchen von beliebigen Stellen an einer grösseren beleuchteten Projektionsfläche, wobei in einem solchen Fall die beiden Zoomobjektive getrennt voneinander betreibbar sein sollten. Ausserdem kann dadurch auch bei beliebigen Entfernungen der Projektionsfläche von den Objektiven der Schnittpunkt bzw. der Winkel zwischen den beiden Mittelstrahlen der beiden Objektive justiert werden, so dass er jeweils in der Ebene der Projektionsfläche zu liegen kommt, was die seitliche Abbildungskongruenz fördert.

Eine Autofokuseinrichtung und/oder eine Autoiriseinrichtung dienen zur benutzerfreundlichen Aufnahmesteuerung der Kamera. Ein mitgeführter dritter Strahlengang - entsprechend der Offenbarung der EP-B1-0 362 737 - kann für die verschiedensten Anwendungen vorgesehen werden, so z.B. in Verbindung mit einer Steuereinheit für das Messen von bestimmten Zuständen im Bereich der Projektionsfläche und/oder für das Steuern der Objektive und/oder der Lichtquelle, wie Fokussierung, Entfernungsmessung, Hell/Dunkel-Überwachung usw.

Der zweite Spiegel 22 an seinem Trägerarm 24 kann nun nicht nur um ein an diesem Trägerarm 24 vorgesehenes Kugelgelenk 24a verschwenkt werden, wie bereits in der EP-B1-0 362 737 geoffenbart, sondern ist an diesem Trägerarm höhenverstellbar, wie beispielhaft in Fig.1 und 2 gezeigt. In Fig.2a sind die Strahlengänge dargestellt. In einer ersten Stellung des zweiten Spiegels 22, hier mit I bezeichnet, wird ein erster Bereich b für die Kamera 14 erfassbar, bzw. vom Projektor 16 beleuchtbar. Wird der Spiegel 22 entlang seines Trägerarms verschoben, und - wie hier dargestellt - der Strahlengang verkürzt, so wird damit ein kleinerer Bereich a erfass- bzw. beleuchtbar. Damit trotz Verschiebung des Spiegels die Ausrichtung auf den gewünschten Teilbereich a des ersten Bereiches b gegeben ist, muss der Spiegel 22 um das Gelenk 24a verschwenkt werden. Der allein durch die Spiegelverschiebung gegebene Zoom-Faktor ist somit durch den Faktor b/a gegeben. Der Fokus am Kamera-Objektiv muss dem verkürzten Strahlengang und damit verkürztem Abtastungsabstand entsprechend nachjustiert werden. Der bevorzugten synchronisierten Bildund Lichtgrösse entsprechend wird auch ein Nachführen am Objektiv des Projektors vorzunehmen sein.

So sind beispielsweise für eine Optik 20-170 mm bei einer $\frac{1}{2}$" Kamera bei einem Abstand von 1,50 m Bilder von 49,23 mm bis maximal 418,46 mm erreichbar, was einem Zoom-Faktor von 8,5 entspricht. Bei einem gefaltetem Strahlengang wird - wie aus Fig.2a zu entnehmen - bei Absenkung des Spiegels um beispielsweise 20 cm der Abtastweg um 40 cm verkürzt, und eine stufenlose Abtastung eines Bildes von 36,10 mm bis maximal 418,46 mm möglich. Dies bedeutet eine Erhöhung des Zoom-Faktors auf 11,6, ohne Einschränkung von Auflösungund Farbechtheit und ohne Verzerrung. Da laufend Aufnahmeelemente, wie CCD's mit immer höherer Auflösung entwickelt werden, hat diese "Spiegelzoom-Technik" grosse Vorteile.

Es versteht sich, dass ein gleicher Effekt auch durch Verkippen des Trägerarms 24, also ohne Verfahren des Spiegels 22, erreicht werden kann, wobei durch Verschwenken des Spiegels 22 bzw. des Spiegels 21, bzw. kombiniertem Verschwenken beider Spiegel die gewünschte Ausrichtung gegeben ist. Über das Verkippen des Trägerarms 24 können gegebenenfalls auftretende Reflexionen vermieden werden.

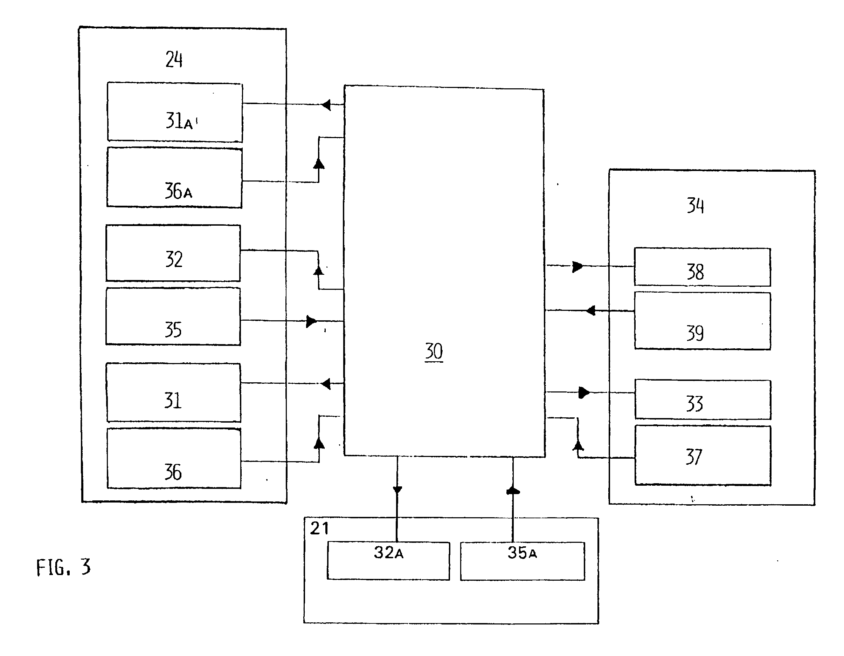

Fig.3 zeigt nun anhand eines Blockdiagramms den über eine Steuereinheit 30, beispielsweise einen Mikrokontroller, steuerbaren, möglichen Katalog für die organisatorische Zusammenstellung der einzelnen Funktionseinheiten. Wird über die Steuereinheit 30 ein bestimmter Zoom-Faktor eingegeben und erfasst, so können am Trägerarm 24 ein das Verschieben des zweiten Spiegels bewirkender Motor 31 und/oder das Verkippen des Trägerarms bewirkender Motor 31a und/oder ein weiterer das Verschwenken des zweiten Spiegels 22 um das Kugelgelenk 24a bewirkender Motor 32 und/oder ein das Verschwenken des ersten Spiegels 21 bewirkender Motor 32a, sowie der Fokus-Motor 33 der Kamera-Optik 34 betätigt werden, wobei Positionsgeber, wie Winkelgeber 35, 35a für die Verschwenkung der Spiegel 22, 21, ein Armlänge-Positionsgeber 36 für die Verschiebung des Spiegels bzw. ein Trägerarm-Winkelgeber 36a für die Verkippstellung des Trägerarms 24 und ein Fokus-Positionsgeber 37 für die Fokus-Stellung vorgesehen sein können. Diese Positionsgeber können Potentiometer, Inkrementalgeber oder ähnliche Signal-Geber vorgesehen sein.

Auch der Zoom-Motor 38 der Kamera-Optik 34 kann über die Steuereinheit angesteuert werden, wobei ein Zoom-Positionsgeber 39 entsprechende Signale an die Steuereinheit liefert. Wie oben dargestellt, können Spiegel-Zoom - d.h. Verlängerung bzw. Verkürzung des Strahlenganges zur Änderung des Abtastabstandes durch Verstellung des Spiegels - und Kamera-Zoom unabhängig voneinander oder auch kombiniert, gegebenenfalls synchron zueinander, betätigt werden; so ist es möglich, den Spiegel-Zoom erst nach voll ausgeschöpftem Kamera-Zoom einzubeziehen. Das Nachführen der Spiegeldrehung kann, muss aber nicht vorgenommen werden, in Abhängigkeit von der gewünschten Anwendung. Wie bereits oben erwähnt, wird auch der Projektor in entsprechender Weise gesteuert werden, auch da sind Positionsgeber für die Objektiv-Einstellung vorzusehen. Das Vorsehen von Gebern zum Feststellen der verschiedenen Lage- und Winkelpositionen erlaubt es, aus jeder Position - sei sie mechanisch händisch erreicht oder elektronisch berechnet und über die Steuereinheit bestimmt - die geforderte Winkel-, Relativ- bzw. Kipp- oder Schwenk-Lage der jeweiligen Bauteile, dem gewünschen Bildausschnitt entsprechend, zu erhalten.

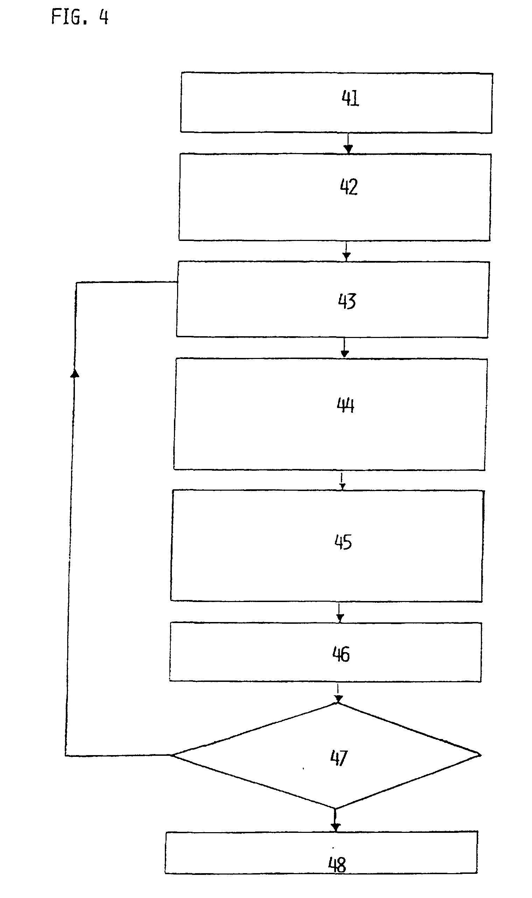

Fig.4 zeigt ein vereinfachtes Flussdiagramm mit der Aufeinanderfolge von erforderlichen Operationen. Anhand des gewünschten Zoomfaktors wird in einem ersten Schritt 41 die erforderliche, gewählte Strahlengangslänge berechnet, in einem zweiten Schritt 42 aus dieser Strahlengangslänge, der durch den entsprechenden Geber bekannten Spiegelentfernung (Trägerarmlänge bzw. Trägerarm-Winkelstellung)) und der durch den entsprechenden Geber bekannten Winkelstellung die neue Trägerarmlänge bzw. Trägerarmwinkelstellung berechnet. Falls (dritter Schritt 43) die über den Armlänge-Positionsgeber 36 bestimmte, aktuelle Trägerarmlänge kleiner sein sollte, als die neu berechnete, gewünschte Trägerarmlänge, wird der Trägerarm ausgefahren, andernfalls der Arm eingefahren wird. Die über Winkelgeber 35, Fokus-Positionsgeber 37 und aktueller und alter Armlänge verfügbaren Werte ermöglichen die Berechnung der neuen Fokus-Position (Schritt 44), ebenso wie die Berechnung der nötigen Verschwenkung für Spiegel 22 und/oder 21 (Schritt 45). Aufgrund der solcherart berechneten Werte werden Fokus und Spiegel über die Betätigung der entsprechenden Motoren neu positioniert (Schritt 46). An der Verzweigung 47 wird für den Fall, dass die neue Armlänge entsprechend der berechneten Armlänge erreicht wurde, der Vorgang abgeschlossen sein (Schritt 48), im negativen Fall zu Schritt 43 und die darauf folgende Schritte zurückgekehrt. Dieses Schema ist sinngemäss für den Projektor anzuwenden.

Es versteht sich, dass dieser Ablauf wenigstens teilweise auch rein mechanisch von der Bedienperson durchgeführt werden kann, ebenso wie eine Kombination aus händisch-mechanischer Bedienung mit rein über die Steuereinheit geregeltem Ablauf möglich ist.

**Patentansprüche**

1. Gerät für das Umwandeln von Bildern oder Abbildern in elektronische Signale,

   - mit einer Kamera (14) mit einem ersten Objektiv (1) zur Aufnahme von auf einer Projektionsfläche (10) vorliegenden Bildern oder Abbildern, und
   - mit einer Lichtquelle (16) mit einem zweiten Objektiv (3) zur Projizierung der von der Lichtquelle (16) erzeugten Lichtstrahlen auf die Projektionsfläche (10),
   - wobei das erste Objektiv (1) als motorisch fokussierbares Objektiv ausgebildet ist und
   - wobei zur Umlenkung der beiden, der Kamera (14) und der Lichtquelle (16) zuzuordnenden Strahlengänge ein erster Spiegel (21) und wenigstens ein an einem Trägerarm (24) um ein Gelenk (24a) motorisch verschwenkbar gelagerter zweiter Spiegel (22) vorgesehen sind, welche beiden Spiegel (21, 22) zwischen der Projektionsfläche (10) und den beiden Objektiven (1, 3) angeordnet sind,

**dadurch gekennzeichnet, dass**

- der zweite Spiegel (22) in Richtung der Längserstreckung des Trägerarms (24) motorisch verschiebbar ist, solcherart die Strahlenganglängen verkürzend bzw. verlängernd.

**2.** Gerät nach Anspruch 1, **dadurch gekennzeichnet, dass** die Verschiebung und die Verschwenkung des zweiten Spiegels (22) über einen ersten Motor (31,) bzw. einen zweiten Motor (32) und die Verstellung des Fokus des ersten Objektivs (1) über einen dritten Motor (33) über ein dem Gerät zugeordnetes Steuergerät (30) gegeben sind, wobei insbesondere ein Positionsgeber (36) zum Registrieren der jeweiligen Trägerarmlänge des Trägerarms (24), ein Winkelgeber (35) zum Registrieren des jeweiligen Verschwenkungswinkels des zweiten Spiegels (22) und ein Fokus-Positionsgeber (37) vorgesehen sind, welcher Positionsgeber (36), Winkelgeber (35) bzw. Fokus-Positionsgeber (37) jeweils entsprechende Signale an die Steuereinheit (30) gibt.

**3.** Gerät nach Anspruch 2, **dadurch gekennzeichnet, dass** das erste Objektiv (1) als Zoomobjektiv ausgebildet ist, dessen Zoomfaktor über das Steuergerät (30) - gegebenenfalls in Abhängigkeit oder gemeinsam mit der Verschiebung und der Verschwenkung des zweiten Spiegels (22) - motorisch verstellbar ist, und gegebenenfalls über eine Synchronisiereinrichtung gemeinsam mit dem zweiten Objektiv (3), welches ebenfalls als motorisch verstellbares Zoomobjektiv ausgebildet ist, verbunden ist.

**4.** Gerät nach Anspruch 2 oder 3, **dadurch gekennzeichnet, dass** dem als Zoomobjektiv ausgebildeten ersten Objektiv (1) ein Zoom-Positionsgeber (39) zugeordnet ist, über den entsprechende Signale der Steuereinheit (30) verfügbar werden.

**5.** Gerät nach einem der Ansprüche 2 bis 4, **dadurch gekennzeichnet, dass** dem als Zoomobjektiv ausgebildeten zweiten Objektiv (3) mit motorisch verstellbarer Fokus-Einrichtung ein Zoom-Positionsgeber und/oder ein Fokus-Positionsgeber zugeordnet ist (sind), über den (die) entsprechende Signale der Steuereinheit (30) verfügbar werden.

**6.** Gerät nach einem der vorhergehenden Ansprüche, **dadurch gekennzeichnet, dass** dem ersten Spiegel (21) ein Motor (32a) zugeordnet ist, der ein Verkippen des Spiegels (21) ermöglicht, wobei gegebenenfalls ein Geber (35a) vorgesehen ist, über den entsprechende Signale der Steuereinheit (39) verfügbar werden.

**Claims**

**1.** Device for converting pictures or images into electronic signals,

- comprising a camera (14) having a first lens (1) for recording pictures or images present on a projection surface (10) and
- comprising a light source (16) having a second lens (3) for projecting the light beams generated by the light source (16) onto the projection surface (10),
- the first lens (1) being in the form of a lens focusable under motor power and
- a first mirror (21) and at least one second mirror (22) mounted on a support arm (24) so as to be pivotable about a joint (24a) under motor power being provided for deflecting the two beam paths to be coordinated with the camera (14) and with the light source (16), which two mirrors (21, 22) are arranged between the projection surface (10) and the two lenses (1, 3),

**characterized in that**

- the second mirror (22) can be displaced in the direction of the longitudinal dimension of the support arm (24) under motor power so as to shorten or lengthen the beam path lengths.

**2.** Device according to Claim 1, **characterized in that** the displacement and the pivoting of the second mirror (22) are effected by means of a first motor (31) and a second motor (32), respectively, and the adjustment of the focus of the first lens (1) by means of a third motor (33) via a controller (30) coordinated with the device, in particular a position generator (36) for registering the respective support arm length of the support arm (24), an angle generator (35) for registering the respective pivoting angle of the second mirror (22) and a focal position generator (37) being provided, which position generator (36), angle generator (35) and focal position generator (37) each sends corresponding signals to the control unit (30).

**3.** Device according to Claim 2, **characterized in that** the first lens (1) is in the form of a zoom lens whose zoom factor is adjustable under motor power via the controller (30) - optionally as a function of or together with the displacement and the pivoting of the second mirror (22) - and is optionally connected via a synchronization means to the second lens (3), which is likewise in the form of a zoom lens adjustable under motor power.

**4.** Device according to Claim 2 or 3, **characterized in that** a zoom position generator (39), via which corresponding signals are available to the control unit (30), is coordinated with the first lens (1) in the form of a zoom lens.

5. Device according to any of Claims 2 to 4, **characterized in that** a zoom position generator and/or a focal position generator is or are coordinated with the second lens (3) in the form of a zoom lens and having focus means adjustable under motor power, via which generator or generators corresponding signals are available to the control unit (30).

6. Device according to any of the preceding Claims, **characterized in that** a motor (32a) which permits tilting of the mirror (21) is coordinated with the first mirror (21), optionally a generator (35a) being provided, via which corresponding signals are available to the control unit (39).


**Revendications**

1. Appareil pour convertir des images ou des représentations en des signaux électroniques,

   - avec une caméra (14), munie d'un premier objectif (1) pour capter des images ou des représentations se présentant sur une surface de projection (10), et
   - avec une source lumineuse (16) munie d'un deuxième objectif (3) pour projeter les rayons lumineux, produits par la source lumineuse (16), sur la surface de projection (10),
   - le premier objectif (1) étant réalisé sous la forme d'objectif à mise au point se faisant de façon motorisée et
   - où, pour dévier les deux chemins de rayon, associés à la caméra (14) et à la source lumineuse (16), sont prévus un premier miroir (21), et au moins un deuxième miroir (22), monté à pivotement et de façon motorisée, autour d'une articulation (24a), sur un bras support (24), les deux miroirs (21, 22) étant disposés entre la surface de projection (10) et les deux objectifs (1, 3),

   **caractérisé en ce que**

   - le deuxième miroir (22) est déplaçable de façon motorisée dans la direction de la longueur du bras support (24) de manière que les longueurs des chemins suivis par les rayons aillent en raccourcissant ou en allongeant.

2. Appareil selon la revendication 1, **caractérisé en ce que** le déplacement et le pivotement du deuxième miroir (22) sont obtenus par un premier moteur (31), respectivement un deuxième moteur (32), et le réglage de mise au point du premier objectif (1) est obtenu par un troisième moteur (33), par l'intermédiaire d'un appareil de commande (30) associé à l'appareil, sachant que, en particulier, sont prévus un capteur de position (36) devant enregistrer la longueur de bras support respectif du bras support (24), un capteur angulaire (25) pour enregistrer l'angle de pivotement respectif du deuxième miroir (22) et un capteur de position de mise au point (37), le capteur de position (36), le capteur angulaire (35), respectivement le capteur de position de mise au point (37) fournissant chacun des signaux correspondants à l'unité de commande (30).

3. Appareil selon la revendication 2, **caractérisé en ce que** le premier objectif (1) est réalisé sous la forme d'objectif zoom à focale variable, dont le facteur de focale est réglable par moteur, par l'intermédiaire de l'appareil de commande (30) - le cas échéant en fonction du, ou conjointement avec le, déplacement et le pivotement du deuxième miroir (22) -, et, le cas échéant, est relié, par l'intermédiaire d'un dispositif de synchronisation, conjointement, au deuxième objectif (3), réalisé également sous la forme d'objectif à focale variable, manoeuvrable par moteur.

4. Appareil selon la revendication 2 ou 3, **caractérisé en ce que** l'on associe au premier objectif (1), réalisé sous la forme d'objectif à focale variable, un capteur de position de focale variable (39), par l'intermédiaire duquel des signaux correspondants sont mis à disposition de l'unité de commande (30).

5. Appareil selon l'une des revendications 2 à 4, **caractérisé en ce qu'**un capteur de position de focale variable et/ou un capteur de position de mise au point, par l'intermédiaire du ou desquels des signaux correspondants sont susceptibles d'être mis à disposition de l'unité de commande (30), est/(sont) associé(s) au deuxième objectif (3) réalisé sous la forme d'objectif à focale variable, muni d'un dispositif de mise au point réglable par un moteur.

6. Appareil selon l'une des revendications précédentes, **caractérisé en ce qu'**au premier miroir (21) est associé un moteur (32a) qui permet un basculement du miroir (21), sachant que, le cas échéant, est prévu un capteur (35a), par l'intermédiaire duquel des signaux correspondants sont susceptibles d'être fournis à l'unité de commande (39).

FIG. 2

FIG. 1

7

FIG. 2ᴀ

FIG. 3

FIG. 4

```
┌─────────────────────────────┐
│             41              │
└─────────────────────────────┘
              │
              ▼
┌─────────────────────────────┐
│             42              │
└─────────────────────────────┘
              │
              ▼
┌─────────────────────────────┐
│             43              │
└─────────────────────────────┘
              │
              ▼
┌─────────────────────────────┐
│             44              │
└─────────────────────────────┘
              │
              ▼
┌─────────────────────────────┐
│             45              │
└─────────────────────────────┘
              │
              ▼
┌─────────────────────────────┐
│             46              │
└─────────────────────────────┘
              │
              ▼
          ╱───────╲
         ╱    47   ╲
         ╲         ╱
          ╲───────╱
              │
              ▼
┌─────────────────────────────┐
│             48              │
└─────────────────────────────┘
```